# EUROPEAN PATENT APPLICATION

(11) **EP 0 691 360 A2**
(43) Date of publication of application: **10.01.1996**
(21) Application number: 95304633.1
(22) Date of filing: 03.07.1995
(51) Int. Cl.: C08G 63/682

(54) **Flame-retardant polyester resin and composition for injection molding**

(30) Priority: 04.07.1994 JP 152329/94
(71) Applicant: POLYPLASTICS CO. LTD., Chuo-Ku Osaka-shi Osaka 541 (JP)
(72) Inventor: Wada, Mitsuo, Fuji-shi, Shizuoka (JP); Nakane, Toshio, Fuji-shi, Shizuoka (JP)
(74) Representative: Jackson, Peter

(57) **Abstract**

A polyester resin which has a flame retardancy and excellent toughness-related properties such as elongation and impact resistance, while maintaining the excellent heat resistance of a crystalline polyester, is provided by the polycondensation of (a) 2,6-naphthalenedicarboxylic acid or an ester-forming derivative thereof, (b) 1,4-butanediol and (c) a halogenated ester-forming compound (c) are subjected as the feed monomers to polycondensation to prepare a flame-retardant polyester resin for injection molding having a halogen content of 10 to 20 wt. %.

## Description

The present invention relates to a specific fire-retardant polyester resin for an injection molding, or a composition thereof. More specifically the present invention provides a polyester resin which has flame retardancy and excellent toughness characteristics such as elongation and impact resistance while maintaining the heat resistance of crystalline polyesters and which is suitable for injection molding.

Crystalline polyester resins, particularly polybutylene terephthalate resin and the like, have excellent mechanical, physical and chemical characteristics and have good processing characteristics such as injection molding, extrusion molding and the like. Accordingly, they have widely been used as engineering plastics for automobiles, electrical and electronic parts, precision instruments, construction materials and miscellaneous goods. On the other hand, a polyester resin has a defect of inflammability, and in order to overcome this defect, flameproofing has been attempted by adding various flame retardants (for example, decabromodiphenyl ether and brominated polycarbonate) and flame retardant aids.

In general, however, the addition of the flame retardants involves the problems that it brings about a reduction in mechanical properties of polyester resins, particularly toughness characteristics such as elongation and impact resistance and that it generates the bleeding of the flame retardants on the surface of a molding.

In general, fine particles of inorganic substances such as antimony trioxide and antimony pentoxide are used as a flame-retardant aid in many cases, and the needed addition amount thereof, though depending on the amount of flame-retardant, is usually used in several weight % based on the resin in order to secure a flame retardancy which meets the widely used as the standard UL-94V. However, there is involved the defect that adding these inorganic fine particles is liable to markedly generate defective portions causing breakage at an interface to the resin and lowers elongation and impact resistance of the polyester resin molding to a large extent.

In order to improve these problems, polyester resins are proposed in which halogens having a flame retardant effect are chemically incorporated into the polyester resins themselves by copolymerizing halogen-containing monomers with the polyester resins and therefore further addition of flame retardants is unnecessary. However, the copolymerization of the halogen-containing monomers in an amount providing a sufficient flame retardant effect involves the problem that it generally lowers the crystallinity of the polyester resin to a large extent and deteriorates mechanical heat resistance such as a load-deflection temperature. In particular, it has been difficult to obtain various moldings which are suited for applications having a heat resistance which is required for automobile and electrical and electronic applications. On the other hand, resins in which a copolymerization ratio of halogen-containing monomers is lowered in order to control the deterioration of this heat resistance within an allowable range involve the problem that the flame retardancy of moldings is substantially reduced while the heat resistance thereof is not damaged so much. Further, the problem has been involved that flame retardant aids of several weight % are required to be added in order to supplement this reduction in flame retardancy, which finally results in damaging toughness characteristics such as elongation and impact resistance of the polyester resin. Thus, it has been extremely difficult to achieve toughness characteristics, heat resistance and flame retardancy of a thermoplastic polyester resin all together at such levels that the moldings thereof for industrial applications are fit for use, and therefore the solution thereof has strongly been desired.

In view of the foregoing, intensive researches made by the present inventors in order to obtain a crystalline polyester resin in which toughness characteristics such as elongation and an impact resistance are excellent and a flame retardancy is substantially achieved while maintaining an excellent heat resistance of the crystalline polyester resin and which is suited for injection molding have resulted in finding that the problems described above can be solved by a specific copolymerized polyester resin and the composition thereof, and completing the present invention.

That is, the present invention provides a flame-retardant polyester resin for :injection molding obtained or obtainable by the polycondensation of:
(a) 2,6-naphthalene dicarboxylic acid or an ester-forming derivative thereof,
(b) 1,4-butanediol, and
(c) a halogenated ester-forming compound, and

having a halogen content of 10 to 20 weight %.

The constituent compounds necessary for forming the flame-retardant polyester resin for injection molding of the present invention are described in more detail below.

First, the polyester resin of the present invention comprises an essential component of 2,6-dicarboxylic acid or an ester-forming derivative thereof (a) as a dicarboxylic acid component. Dialkyl ester, diphenyl ester or other diacylated compounds can be used as the ester-forming derivative, and preferably used is a dialkyl ester, more preferably a dimethyl ester. In the polyester resins used for industrial applications in which a high level heat resistance is required, aromatic dicarboxylic acids represented by terephthalic acid are generally used as the dicarboxylic acid component. Either of polyethylene terephthalate and polybutylene terephthalate which are typical industrial resins uses terephthalic acid as the dicarboxylic acid component. However, in the case where monomers which lower the crystallinity of a resin like the component (c) in the present invention are copolymerized, characteristics related to a heat resistance, such as a melting point and a flame retardancy are lowered to below a level where the resin is fit for industrial applications if the dicarboxylic acid component is terephthalic acid, and therefore terephthalic acid is not preferred. With a view to heat resistance, flame retardancy and economical efficiency where a resin is fit for use on an industrial scale including other dicarboxylic acid components, 2,6-naphthalenedicarboxylic acid or the ester-forming derivative thereof are most suitably used as the dicarboxylic acid component in order to achieve the objects of the present invention.

Further, in the polyester resin of the present invention, 1,4-butanediol (b) is used as the diol component. If other diol components are used in combination with the dicarboxylic acid component (a), the crystallization speed of the polyester resin of the present invention is lowered to make the solidification of the resin insufficient in the range of conventional injection molding conditions, and the resin cannot be injection molded without notably elongating the molding cycle. Accordingly, such resin is not fit for use as a resin for injection molding. For example, if ethylene glycol, which is most generally used as a diol component and also used as a diol component for a polyethylene terephthalate resin, is used as the diol component in the present invention, injection moldability is deteriorated as compared with that of the resin using 1,4-butanediol, and a normal molding is not obtained.

Because of the foregoing reasons, the compounds described above are selectively used as the dicarboxylic acid component and the diol component in the present invention.

Next, the polyester resin of the present invention is a polyester copolymer having halogen incorporated into the molecule thereof by using the halogenated ester-forming compound of the component (c). Any compounds can be used as the halogenated compound used for this purpose as far as they are ester-formable. They are preferably halogenated dicarboxylic acid, halogenated diol, and the derivatives thereof, more preferably halogenated diol represented by the following Formula (1):

HO-R-O-A-O-R-OH (1)

(wherein A represents a divalent organic group containing at least one halogenated aromatic ring, and R represents a divalent organic group selected from an aliphatic hydrocarbon group having a carbon number of 2 to 8 and a polyoxyalkylene group.)

The divalent organic group represented by A reveals, for example, a halogenated arylene group, and the examples thereof include halogenated phenylene, halogenated naphthylene, halogenated diphenylene, and a group represented by the following formula (2): 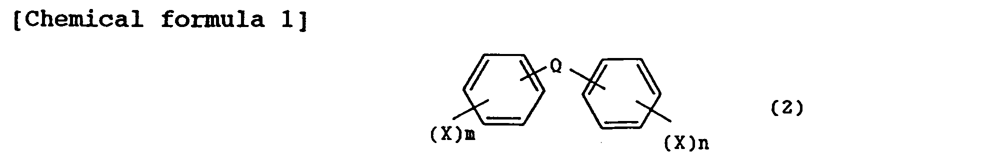
(wherein Q represents an oxy group, a sulfonyl group, a carbon group, a methylene group, a dichloromethylene group, an ethylidene group, a butylidene group, a 2,2'-propylidene group, a 1,1'-phenetylidene group, or a phenylenebis(2,2'-propylidene) group; X represents halogen; and m and n each represent an integer of 1 to 4.)

At least four halogen atoms are preferably contained in the divalent organic group represented by A, and the halogen is particularly preferably bromine. A is particularly preferably a 2,2-bis[4-(3,5-dibromophenylene)]propane group or 4,4'-(3,3',5,5'-tetrabromobiphenylene) group.

In Formula (1), the divalent organic group represented by R includes, for example, ethylene, propylene, isopropylene, butylene, isobutylene, neopentylene, hexylene, polyoxypropylene, and polyoxyisopropylene groups. It is preferably an ethylene or isopropylene group. The compound particularly preferred as the component (c) includes 2,2-bis-[4-(2-hydroxy-ethoxy)-3,5-dibromophenylene]propane and 4,4'-bis(2-hydroxy-ethoxy)-3,3',5,5'-tetrabromobiphenyl.

It is very important to add the halogenated compound of the component (c) so that a halogen content in the resulting copolymer is 10 to 20 weight, preferably 10 to 15 weight %. A halogen content of less than 10 weight % does not provide a sufficient flame retardancy, and that exceeding 20 weight % lowers the melting point and heat resistance such as a load-deflection temperature, and therefore the resin is not fit for use as a polyester resin used for applications of industrial parts and is not preferred. The halogen content is controlled by adjusting the amount thereof depending on the kind of the component (c).

The flame-retardant polyester copolymer for injection molding of the present invention can be produced using conventional production processes for polyesters. For example, the monomers of the components (a), (b) and (c) are heated to about 150 to 280°C in the presence of a catalyst to carry out esterification or transesterification, and then polycondensation is carried out while distilling off excessive monomers or released components under a reduced pressure, whereby the copolymer is obtained. In this case there can be used singly, or in combination of two or more kinds, known catalysts generally useful for the polycondensation reaction of polyester, such as tetralkoxytitanium compounds including tetrabutoxytitanium, titanium oxalate metal salts including titanium potassium oxalate, tin compounds including dibutyl tin oxide and dibutyl tin laurate, metal acetates including zinc acetate, lead acetate, manganese acetate and calcium acetate, and antimony compounds including antimony trioxide.

A copolymer (including an oligomer) obtained by melting polymerization or solution polymerization in the present invention can be subjected to so-called solid-phase polymerization in which the copolymer is processed in a vacuum or an inert gas at high temperatures in a range where particles are not fused in order to increase the molecular weight thereof.

The flame-retardant polyester resin for injection molding of the present invention has a molecular weight of preferably 0.6 to 1.8, particularly preferably 0.7 to 1.5 in terms of an intrinsic viscosity.

The flame-retardant polyester resin for injection molding of the present invention as described above reveals an excellent flame retardancy, and in order to further enhance the flame retardancy, flame-retardant aids or assistants of 2 weight % or less are preferably added. The content of the retardant aid is preferred to range from 0.1 to 2 wt.%, 1 wt.% or less, or 0.1 to 1 wt.%. Antimony compounds such as antimony trioxide, antimony pentoxide, and halogenated antimony are preferably used as the flame-retardant aid. In addition to the above, there can be used metal compounds containing zinc and bismuth, fireclay silicates such as magnesium hydroxide and asbestos, and halogenated polymers such as brominated polycarbonates and brominated epoxy resins. The addition of an amount of the flame-retardant aid exceeding 1 weight % lowers the toughness characteristics of the flame-retardant polyester resin or the composition thereof, such as elongation and impact resistance, and it is not fit for use as a polyester used for industrial parts.

Small amounts of other thermoplastic resin components can additionally be used in combination with the flame-retardant polyester resin for the injection molding of the present invention or the composition thereof according to purposes in a range where the characteristics thereof are not damaged. Any ones can be used as other thermoplastic resins used here as long as they are stable resins at high temperatures. They include, for example, polyamide, polycarbonate, polyphenylene sulfide, polyphenylene oxide, polyacetal, polysulfone, polyethersulfone, polyetherimide, polyetherketone, and fluorinated resins.

Further, known substances which are generally added to thermoplastic resins and thermosetting resins, that is, stabilizers such as anti-oxidants and UV absorbers, anti-static agents, colorants such as dyes and pigments, lubricants, crystallization accelerators, crystal nucleus agents, and inorganic fillers can be blended as well into the flame-retardant polyester resin for injection molding of the present invention or the composition thereof in a range where the characteristics thereof are not damaged in order to provide them with desired characteristics according to purposes.

The inorganic fillers include normal inorganic fibers such as glass fiber, carbon fiber, ceramic fiber, boron fiber, potassium titanate fiber, and asbestos, granulated inorganic compounds such as calcium carbonate, talc, clay, mica, glass flake, glass beads, and carbon black, and whiskers. These inorganic fillers can be used singly or in combination of two or more kinds.

The halogenated flame-retardant polyester resin composition of the present invention can readily be prepared with facilities and methods which are generally used for preparing conventional resin compositions. There can be used any of, for example: 1) a method for preparing pellets in which respective components are mixed and then the mixture is kneaded and extruded with a uniaxial or biaxial extruder; 2) a method in which pellets having different compositions are once prepared and the pellets are mixed in prescribed amounts for molding; and 3) a method in which one or two of respective components are charged directly into a molding machine in molding. Further, a method in which a part of resin components is mixed with the other components in a powdery form and added is a preferred method in attempting to blend the components evenly.

All melt-molding methods generally used are effective as a molding method for the halogenated flame-retardant polyester resin of the present invention or the composition thereof. The effects thereof are largely revealed particularly in injection moldings designed for making the best use of the heat resistance thereof for industrial applications including electric and electronic parts and automobile parts.

The present invention will be explained below in further detail with reference to the following non-limiting examples.

The measuring methods for the evaluation items shown in the following examples were as follows:
(1) Tensile strength:
   Measured according to ASTM D-638.
(2) Izod impact strength (with notch):
   Measured according to ASTM D-256.
(3) Flame retardancy:
   Measured according to UL-94V and classified into V-0, V-2 and HB.
(4) oxygen index:
   Measured according to JIS K 7201.
(5) Injection moldability:
   A box molding (W 15 mm x L 40 mm x H 30 mm x thickness 1 mm) was molded and the grade of a molding status was judged.

| Molding conditions: | |
|---|---|
| Cylinder temperature | 260°C |
| Die temperature | 60°C |
| Injection time | 20 sec |
| Cooling time | 10 sec |
| Injection pressure | 750 kg/cm |
| Injection speed | 1 m/min |

### Example 1

Dimethyl 2,6-naphthalenedicarboxylate (DMN) of 100 weight parts, 1,4-butanediol (BD) of 51 weight parts, 2,2-bis[4-(2-hydroxyethoxy)-3,5-dibromophenylene]propane (C-1) of 28.5 weight parts, and tetrabutyl titanate of 0.15 weight parts were charged into a polycondensation reactor equipped with a stirrer, a nitrogen-introducing tube, a distillation column, and a vacuum pump. The mixture was stirred at 180°C for 40 minutes in a nitrogen stream, and resulting methanol was distilled off. Then, after stopping introducing nitrogen, the temperature was elevated up to 250°C while reducing the pressure of the reactor, and the mixture was finally heated at 0.1 Torr for 1.5 hour, followed by distilling off excessive BD, whereby the intended flame-retardant polyester resin was obtained. With respect to the characteristics of the polyester resin, a copolymer composition by an intrinsic viscosity and H'-NMR and a bromine content based on the results thereof were measured, and the peak top temperature of a melting point peak at a temperature-elevating speed of 10°C/min was determined with a differential thermal analyzer (DSC). Further, test pieces for injection molding were prepared from this copolymerized polyester by a conventional method with an injection molding machine, and the physical properties thereof were evaluated.

### Examples 2 to 4

The copolymerized polyesters were prepared, molded and evaluated in the same manner as those in Example 1, except that the charge ratio of the monomers and the intrinsic viscosity were changed.

### Example 5

A copolymerized polyester was prepared in the same manner as that in Example 1, and antimony trioxide of 0.5 weight % was mixed thereinto. The polymer was melted, kneaded and extruded at 260°C with a 30 mm extruder to make pellets. They were molded and evaluated in the same manners as those in Example 1.

### Example 6

A copolymerized polyester was prepared from dimethyl 2,6-naphthalenedicarboxylate (DMN) of 100 weight parts, 1,4-butanediol (BD) of 51 weight parts, 4,4'-bis(2-hydroxyethoxy)-3,3',5,5'-tetrabromobiphenyl (C-2) of 26.6 weight parts, and tetrabutyl titanate of 0.15 weight part, molded and evaluated in the same manner as those in Example 1.

### Comparative Examples 1 to 4

The copolymerized polyesters were prepared according to a monomer charge composition shown in Table 2, molded and evaluated in the same manner as those in Example 1.

### Example 7

A copolymerized polyester was prepared according to the charge composition shown in Table 2, molded and evaluated in the same manner as those in Example 5.

**Table 1**

| | Examples | | | | | |
|---|---|---|---|---|---|---|
| | 1 | 2 | 3 | 4 | 5 | 6 |
| DMN (weight parts) | 100 | 100 | 100 | 100 | 100 | 100 |
| DMT (weight parts) | - | - | - | - | - | - |
| BD (weight parts) | 51 | 49 | 47 | 51 | 51 | 51 |
| (c-1) (weight parts) | 28.5 | 44.0 | 56.4 | 28.5 | 28.5 | - |
| (c-2) (weight parts) | - | - | - | - | - | 26.6 |
| Antimony trioxide (weight %) | - | - | - | - | 0.5 | - |
| Intrinsic viscosity of copolymer | 0.76 | 0.72 | 0.70 | 0.90 | 0.76 | 0.72 |
| Ratio of (c) component in copolymer (mol %) | 10.0 | 17.0 | 21.8 | 10.0 | 10.0 | 10.0 |
| Halogen content in copolymer (weight %) | 11.0 | 15.0 | 18.0 | 11.0 | 11.0 | 11.7 |
| Tm (°C) | 218 | 207 | 198 | 218 | 218 | 219 |
| Tensile strength (kg/cm) | 560 | 540 | 510 | 560 | 570 | 550 |
| Tensile elongation (%) | 200< | 200< | 200< | 200< | 150 | 200< |
| Izod impact strength | 5.5 | 6.2 | 6.2 | 5.9 | 5.0 | 5.2 |
| Flame retardancy | V-0 | V-0 | V-0 | V-0 | V-0 | V-0 |
| Oxygen index | 28 | 30 | 31 | 28 | 34 | 28 |
| Injection moldability | Good | Good | Good | Good | Good | Good |

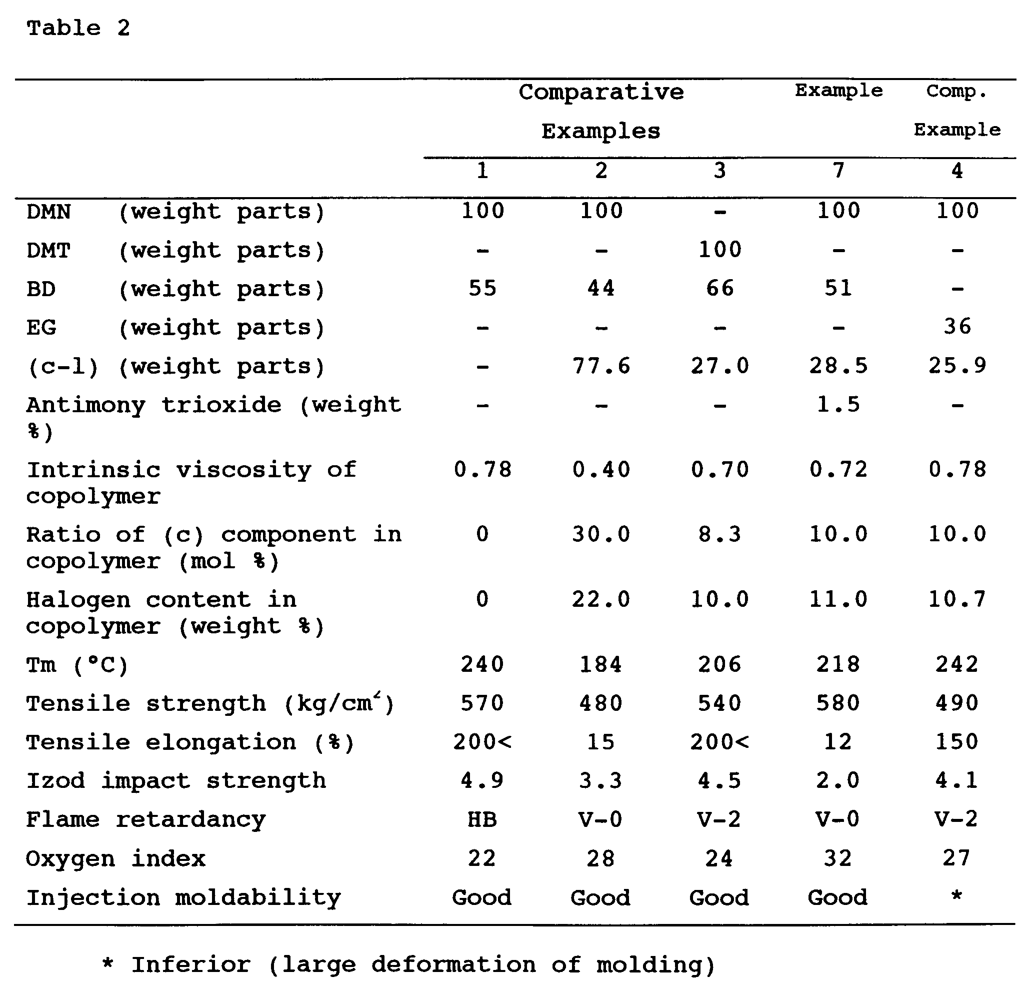

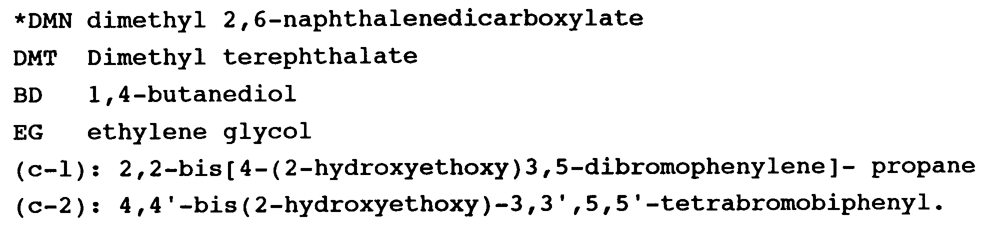

As described above, the flame-retardant polyester resin of the present invention or the composition thereof is a crystalline polyester resin which has excellent toughness characteristics such as elongation and impact resistance and achieves substantial flame retardancy while maintaining the heat resistance of a crystalline polyester resin. The moldings thereof can suitably used particularly for industrial resinous parts in the electrical, electronic and automobile fields.

## Claims

1. A flame-retardant polyester resin for injection molding obtained by the polycondensation of:
(a) 2,6-naphthalenedicarboxylic acid or an ester-forming derivative thereof,
(b) 1,4-butanediol, and
(c) a halogenated ester-forming compound, and having a halogen content of 10 to 20 wt. %.

2. A polyester resin as claimed in claim 1, wherein said halogenated ester-forming compound (c) is a halogenated dicarboxylic acid, a halogenated diol, or a derivative thereof.

3. A polyester resin as claimed in claim 1, wherein said halogenated ester-forming compound (c) is a halogenated diol represented by the following formula (1):
HO-R-0-A-0-R-OH (1)
(wherein A stands for a bivalent organic group containing at least one halogenated aromatic ring; and R stands for a bivalent organic group selected from among aliphatic hydrocarbon groups having 2 to 8 carbon atoms and polyoxyalkylene groups.)

4. A polyester resin as claimed in any of claims 1 to 3, wherein the halogen of said halogenated ester-forming compound (c) is bromine.

5. A flame-retardant polyester resin composition for injection molding comprising the polyester resin as defined in any of claims 1 to 4, and at most 2 wt. % (based on the total amount of the composition) of a flame-retardant assistant added thereto.

6. A composition as claimed in Claim 5, in which the flame-retardant assistant is added in an amount of 1 wt.% or less.
